# EUROPEAN PATENT APPLICATION

(11) **EP 0 533 398 A1**
(43) Date of publication of application: **24.03.1993**
(21) Application number: 92308225.9
(22) Date of filing: 10.09.1992
(51) Int. Cl.: G02F 1/09

(54) **Optical isolator with polarization dispersion correction**

(30) Priority: 19.09.1991 US 762665
(71) Applicant: AT&T Corp., New York, NY 10013-2412 (US)
(72) Inventor: Swan, Clarence Burke, Allentown, Pennsylvania 18103 (US)
(74) Representative: Johnston, Kenneth Graham

(57) **Abstract**

An optical isolator is disclosed which includes means for correcting the polarization dispersion present in conventional polarization independent optical isolators. Correction of the polarization dispersion is provided by a birefringent plate of length ℓ, the length chosen to equalize the optical signal path traversed by each polarization state (i.e., e-rays and o-rays) through the complete isolator.

## Description

### Background of the Invention

### Technical Field

The present invention relates to an optical isolator with polarization dispersion correction and, more particularly, to an optical isolator including a birefringent compensator to perform the polarization dispersion correction.

### Description of the Prior Art

To reduce the insertion loss for coupled fibers, an isolator should operate independent of the polarization state of the applied signal. One arrangement for eliminating polarization dependence is discussed in the article "Compact optical isolator for fibers using birefringent wedges", by M. Shirasaki et al. appearing in Applied Optics, Vol. 21, No. 23, December 1982 at pp. 4296-9. In particular, Shirasaki et al. utilize a pair of birefringent wedges, at the the input and output of the Faraday rotator, to separate an incident beam into orthogonal, linear polarizations which travel independently through the isolator.

Although the Shirasaki et al. arrangement, and other commercially available isolators, may be polarization independent, they may exhibit polarization dispersion in that the propagation time of the rays through the birefringent material is a function of polarization state (i.e., extraordinary polarization state vs. ordinary polarization state). In particular, the birefringent material will have a different refractive index for each polarization state. As a result, a net dispersion (i.e., propagation delay between polarization states) on the order of a few picoseconds will exist as the rays emerge from the isolator. For some applications, this dispersion may be a problem. Additionally, the polarization dispersion may result in a change in the polarization state of the input light. In particular, the wavelength dispersion of the propagation delay produces pseudo-depolarization in a non-monochromatic input light ray by transferring each spectral component into a different polarization state. In general, both of these effects may be harmful to system performance. The accumulated result of using several such devices in a system may be significant and substantial.

Therefore, a need remains in the art for a means of compensating, or eliminating, the polarization dispersion introduced in conventional optical isolator arrangements.

### Summary of the Invention

The need remaining in the prior art is addressed by the present invention which relates to an optical isolator with polarization dispersion correction and, more particularly, to an optical isolator including a birefringent compensator to provide the polarization dispersion correction.

In one embodiment of the present invention, an optical isolator comprises Faraday rotation means and associated polarization selective (e.g., birefringent) devices. The birefringent devices function to split an optical signal into orthogonal polarization states (i.e., ordinary and extraordinary), and their optical axes are oriented such that, in combination with the 45° polarization rotation (nonreciprocal) associated with the Faraday rotation means, the polarization states of a signal propagating in the forward direction retain their identity as they pass through the birefringent devices. In particular, the above-described combination results in no net angular deviation of either ray as the ordinary and extraordinary waves exit the output birefringent device. The combination provides optical isolation in the reverse direction since the Faraday rotation means causes the two polarization states to switch identities in going through the birefringent devices. The result is that both rays (i.e., o-ray and e-ray) experience angular deviation and neither polarization state is coupled to the input signal path of the isolator.

The polarization propagation delay (i.e., dispersion) in the transmission (forward) direction of a first polarization state (e.g., o ray) with respect to the second, orthogonal polarization state (e.g., e ray) is canceled in accordance with the teachings of the present invention by inserting a birefringent plate of a predetermined length ℓ along the optical signal path, where ℓ is a function of the material used to form the birefringent plate and is chosen to essentially cancel any dispersion in propagation between the e-ray and o-ray. For the special case where the birefringent plate comprises the same material as the polarization selective devices (e.g., rutile), the length ℓ is essentially equal to the optical path length through the polarization selective birefringent devices. The birefringent compensating plate of the invention is oriented to delay the leading ray (e.g., ordinary) with respect to the lagging ray (e.g., extraordinary) such that the total propagation time through the isolator structure, for each polarization state, is essentially equalized.

### Brief Description of the Drawing

Referring now to the drawings,
FIG. 1 illustrates an exemplary polarization dispersion corrective optical isolator formed in accordance with the teachings of the present invention; and
FIG. 2 illustrates an exemplary packaged optical isolator including the polarization dispersion correction of the present invention.

### Detailed Description

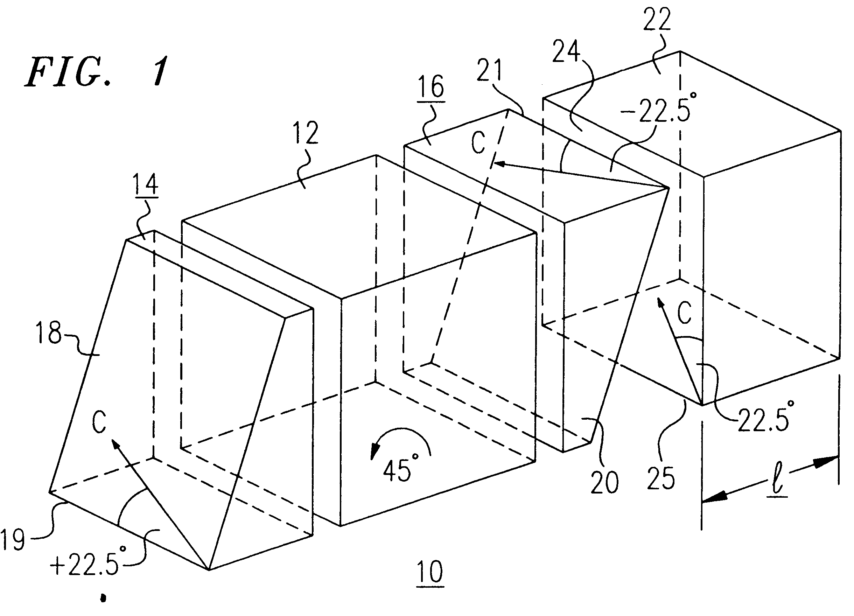

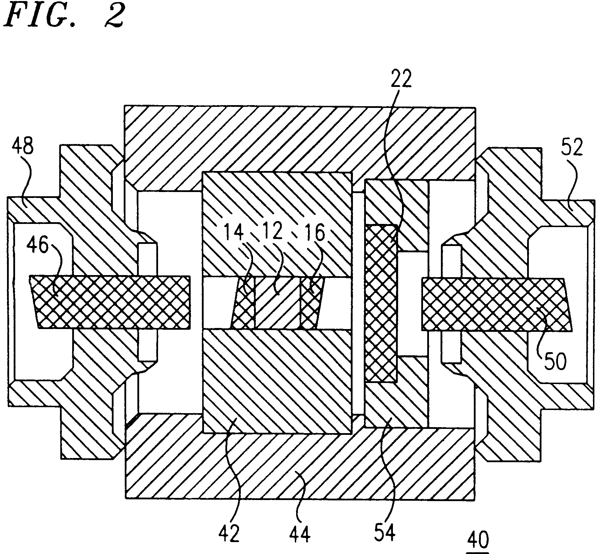

FIG. 1 illustrates an exemplary (simplified) optical isolator 10 including polarization dispersion corrective means in accordance with the teachings of the present invention. It is to be understood that in actual operation, such an isolator requires a permanent magnet and may including lensing elements, as discussed hereinbelow in association with FIG. 2. For the sake of clarity, these components are not shown in FIG. 1 and are not considered as necessary for an understanding of the operation of the isolator in accordance with the teachings of the present invention. Referring to FIG. 1, isolator 10 includes a Faraday rotator 12 (e.g., YIG crystal, bismuth-substituted YIG, etc.) disposed between a pair of birefringent devices 14,16. As illustrated, birefringent devices 14,16 comprise a pair of birefringent wedges with their optical axes (C-axes) oriented at 45° to one another. In particular, wedge 14 is illustrated as having its C-axis oriented at an angle of + 22.5° with respect to edge 19 of beveled surface 18. Similarly, wedge 16 is illustrated as having its C-axis oriented at an angle of - 22.5° with respect to edge 21 of beveled surface 20. Faraday rotator 12, as is well-known in the art, is designed to provide a nonreciprocal (e.g., counterclockwise) 45° rotation to an optical signal passing therethrough. Thus, as will be discussed in detail below in association with FIG. 2, a transmitted optical signal will pass through isolator 10 relatively unimpeded, while a reverse (e.g., reflected) optical signal will be blocked by isolator 10 from re-entering the optical signal path.

As discussed above, the two polarization states (extraordinary and ordinary) of a transmitted optical signal exhibit different transit times as they propagate through birefringent wedges 14 and 16. In particular, the refractive index (nₑ) for an extraordinary (e-) ray within the birefringent material (e.g., titanium dioxide) is slightly greater than the refractive index (nₒ) for an ordinary (o-) ray traveling through the same material, where the refractive index is defined as the ratio of the signal's velocity in free space with respect to the velocity in the birefringent material. In particular, for TiO₂ (rutile) wedges utilized with an input lightwave at λ = 1.5µm, nₑ is approximately 2.71 and nₒ is approximately 2.45. Therefore, as a function of the total optical path length through wedges 14 and 16, the e-ray emerging from second birefringent wedge 16 will be delayed relative to the o-ray, where the delay (defined as polarization dispersion) may be on the order of a few picoseconds.

In accordance with the teachings of the present invention, this polarization dispersion is essentially canceled by inserting an additional birefringent device along the optical signal path which functions to adjust the delay between polarization states such that the e- and- o-rays emerge essentially simultaneously from isolator 10. Referring to FIG. 1, polarization dispersion correction is accomplished in this particular embodiment of the present invention by including a birefringent plate 22 of thickness ℓ along the optical signal path. In particular, plate 22 is oriented with respect to birefringent wedge 16 such that the rays entering plate 22 exchange polarization state. That is, plate 22 sees the e-ray exiting second birefringent wedge 16 as an "o" ray, and the o-ray exiting wedge 16 as an "e" ray. For the arrangement illustrated in FIG. 1, plate 22 is shown as having its C axis at an angle of - 22.5° with respect to edge 25 of front face 24 so as to provide the exchange of polarization state identity. That is, the C-axis of plate 22 is rotated a total of 90° so as to be orthogonal to the C-axis of second wedge 16. Alternatively, if plate 22 is inserted in the optical signal path before first wedge 14, the C-axis of plate 22 would be oriented at an angle of 90° with respect to the C-axis of first wedge 14. This orthogonal orientation of the optical axis of plate 22 thus allows the original o-ray exiting second wedge 16 to behave as an "e" ray within plate 22 and therefore be delayed relative to the original e ray. As mentioned above, the length ℓ of plate 22 is chosen so that the delay allows the e and o rays to simultaneously exit isolator 10. For the case where the same material (e.g., TiO₂) is used for both birefringent wedges 14, 16 and plate 22, the length ℓ of plate 22 is essentially equivalent to the total optical path length through wedges 14,16. Otherwise, plate thickness ℓ is function of the refractive indexes (i.e., nₑ and nₒ) of the chosen material (e.g., calcite) and is calculated to essentially cancel the polarization dispersion.

FIG. 2 illustrates an exemplary packaged isolator 40 including a birefringent compensating plate of the present invention. Referring to FIG. 2, Faraday rotator 12, first wedge 14 and second wedge 16 are joined (using an optically transparent and anti-reflective material) and disposed within a permanent magnet 42, the magnet utilized to provide the requisite 45° rotation through the magneto-optic material of Faraday rotator 12. The arrangement as described thus far is then fixed within an outer package 44. An input lensing arrangement 46, used to form a collimated beam, is held within a fixture 48, where fixture 48 is attached to outer package 44. Similarly, an output lensing arrangement 50, used to form a focused beam, is held within a fixture 52 which is subsequently attached to outer package 52. Polarization dispersion compensation birefringent plate 22 of the present invention is disposed between second wedge 16 and output lensing arrangement 50, as shown in FIG. 2. In particular, plate 22 is held within a fixture 54 which is attached to outer package 44.

It is to be noted that plate 22 may be inserted in the optical signal path between input lensing arrangement 46 and first birefringent wedge 14 and perform the same polarization dispersion compensation function. Further, although the above-described arrangement utilizes birefringent wedges as polarization selective components, it is to be understood that other suitable combinations of polarization selective devices, well-known in the design of optical isolators (for example, a combination of three birefringent plates of appropriate thicknesses) may be used and the polarization dispersion compensating plate of the present invention accordingly sized and oriented to form relatively equal optical path lengths for both the extraordinary and ordinary rays traveling therethrough. Further, it is to be understood that similar results can be obtained utilizing a birefringent plate of a material other than that used to form the polarization selective birefringent devices, where the length of the birefringent compensating plate is selected on the basis of the refractive index difference for the two rays of the chosen material.

## Claims

1. An optical isolator comprising
polarization selective means (14, 16) for dividing an applied optical signal into a first polarization state and a second, orthogonal polarization state;
Faraday rotation means (12) for providing a nonreciprocal 45° rotation to an optical signal passing therethrough, wherein said polarization selective means is oriented with respect to said Faraday rotation means to provide optical transmission to a forward-directed optical signal and optical isolation to a reverse-directed optical signal; and
polarization dispersion compensation means (22) comprising a predetermined thickness ℓ and oriented at an appropriate angle with respect to said polarization selective means such that the first and second polarization states of a forward-directed optical signal traverse a substantially equivalent optical path length.

2. An optical isolator as defined in claim 1 wherein the polarization dispersion compensation means is oriented such that the first and second polarization states of a forward-directed optical signal exchange polarization states at the input thereof.

3. An optical isolator as defined in claim 1 wherein the polarization selective means comprises
first polarization selective means (14) including an optical (C) axis and disposed before the Faraday rotation means; and
second polarization selective means (16) including an optical (C) axis and disposed after said Faraday rotation means, the C axis of said second polarization selective means oriented at an angle of approximate 45° with respect to the C axis of said first polarization selective means.

4. An optical isolator as defined in claim 3 wherein the polarization dispersion compensation means is disposed before the Faraday rotation means, or between the first polarization selective means and the Faraday rotation means, or before the first polarization selective means, or after the Faraday rotation means, or between the Faraday rotation means and the second polarization selective means, or after the second polarization selective means.

5. An optical isolator as defined in claim 3, wherein the first and second polarization selective means comprise a pair of birefringent wedges.

6. An optical isolator as defined in claim 5 wherein the optical axis of a first birefringent wedge is oriented at an angle of approximately + 22.5° with respect to the optical axis of the isolator, and the optical axis of the second birefringent wedge is oriented at an angle of approximately -22.5° with respect to the optical axis of the isolator.

7. An optical isolator as defined in claim 1 wherein the polarization dispersion compensation means comprises a birefringent plate, or is disposed before the Faraday rotation means, or adjacent to the Faraday rotation means, or after the Faraday rotation means, or adjacent to the Faraday rotation means.

8. An optical isolator as defined in claim 1 wherein the polarization dispersion compensation means comprises the same material as the polarization selective means, and the predetermined length ℓ is essentially equivalent to the optical path length through said polarization selective means.

9. An optical isolator as defined in claim 8 wherein the polarization dispersion compensation means and the polarization selective means comprise TiO₂.
